# EUROPEAN PATENT APPLICATION

(11) **EP 3 153 850 A1**
(43) Date of publication of application: **12.04.2017**
(21) Application number: 15188999.5
(22) Date of filing: 08.10.2015
(51) Int. Cl.: G01N 27/12, G01D 5/16, G01D 3/10

(54) **AN APPARATUS AND ASSOCIATED METHOD FOR SENSING A PHYSICAL STIMULUS**

(71) Applicant: Nokia Technologies Oy, 02610 Espoo (FI)
(72) Inventor: ALLEN,, Mark, Cambridge, Cambridgeshire CB23 6BA (GB); WEI,, Di, Cambridge, CB3 0FA (GB); BESSONOV,, Alexander, Cambridge, CB1 3HR (GB)
(74) Representative: Potter Clarkson LLP

(57) **Abstract**

An apparatus comprising a detection circuit and an associated reference circuit, each circuit comprising a power source coupled to a memristor via a resistive sensor, the power source configured to apply a voltage to the memristor to switch the memristor from a first resistance state to a second resistance state when the resistive sensor is exposed to a physical stimulus, wherein the power source of the detection circuit is configured to have a discharge rate which is dependent upon the physical stimulus whilst the power source of the associated reference circuit is configured to have a discharge rate which is not dependent upon the physical stimulus, the resulting difference in discharge rates between the respective power sources allowing the timing of the physical stimulus to be determined based on whether or not the respective memristors of the detection and associated reference circuits have both switched.

## Description

### Technical Field

The present disclosure relates to sensors (including humidity), associated methods and apparatus. Certain embodiments specifically concern an apparatus comprising a detection circuit and an associated reference circuit each having a respective power source coupled to a memristor via a resistive (e.g. humidity) sensor. In these embodiments, a difference in the discharge rates of the respective power sources allows the timing of a physical stimulus (e.g. humidity peak) to be determined. Some embodiments may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

The portable electronic devices according to one or more embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop environmental sensors having increased sensitivity and functionality at lower cost and with lower power consumption than existing sensors.

The listing or discussion of a prior-published document or any background in this specification should not necessarily be taken as an acknowledgement that the document or background is part of the state of the art or is common general knowledge.

### Summary

According to a first aspect, there is provided an apparatus comprising a detection circuit and an associated reference circuit, each circuit comprising a power source coupled to a memristor via a humidity sensor, the power source configured to apply a voltage to the memristor to switch the memristor from a first resistance state to a second resistance state when the humidity sensor is exposed to a peak in environmental humidity, wherein the power source of the detection circuit is configured to have a discharge rate which is dependent upon the environmental humidity whilst the power source of the associated reference circuit is configured to have a discharge rate which is not dependent upon the environmental humidity, the resulting difference in discharge rates between the respective power sources allowing the timing of the humidity peak to be determined based on whether or not the respective memristors of the detection and associated reference circuits have both switched.

The detection and associated reference circuits may each comprise a plurality of memristors coupled to the respective power source via the respective humidity sensor, and each memristor may be configured to switch from the first resistance state to the second resistance state at a different applied voltage.

One or more of the memristor materials, dimensions and fabrication conditions may be configured to define the respective applied voltages at which the memristors switch from the first resistance state to the second resistance state.

Each memristor may be connected in series to a respective resistor, and the respective resistors may have different resistance values from one another to define the applied voltages at which the associated memristors switch from the first resistance state to the second resistance state.

The resistors may each have a resistance value somewhere between that of the first and second resistance states of the associated memristor to prevent the memristor from shorting the circuit in the second resistance state.

Each memristor may be configured to have a resistance of around 10⁶-10⁸Ω (e.g. 1-100MΩ) in the first resistance state and a resistance of around 10²Ω (e.g. 100-500Ω) in the second resistance state.

Each memristor may be configured to switch from the first resistance state to the second resistance state when a voltage of between 0.1V and 5V is applied thereto.

Each memristor may be configured to switch back from the second resistance state to the first resistance state when a reverse voltage above a predefined threshold is applied thereto.

The memristors of each circuit may be arranged in parallel or in series.

The detection and reference circuits may comprise a respective readout electrode associated with each memristor, and a counter electrode common to all memristors of the respective circuit, to enable a readout voltage to be applied across a particular memristor to determine its resistance state.

The detection and associated reference circuits may comprise a respective diode associated with each readout electrode to prevent crosstalk between the memristors during application of the readout voltage.

Each memristor may comprise a layer of transition metal oxide in contact with a layer of transition metal chalcogenide and positioned between metal electrodes. A variety of other memristive materials from the group of metal oxides, metal chalcogenides, metal halides and organic polymers may be used instead.

The power source of each circuit may be a proton battery comprising a graphene oxide-reduced graphene oxide junction configured to generate protons in the presence of water, the generation of protons causing a reduction in the discharge rate of the power source, and the power source of the associated reference circuit may further comprise a water barrier configured to prevent contact between water in the surrounding environment and the graphene oxide-reduced graphene oxide junction.

The humidity sensor of each circuit may be a resistive humidity sensor configured to exhibit a decrease in resistance on exposure to the peak in environmental humidity, the decrease in resistance allowing the voltage from the power source to be applied to the memristor.

The humidity sensor may comprise graphene oxide having one or more functional groups attached thereto, and the one or more functional groups may be configured to interact with water in the surrounding environment to generate protons and produce a resulting decrease in resistance.

The detection and associated reference circuits may be formed on a memory card such that the resistive state of the respective memristors can be read out using a card reader.

The memory card may comprise a cardboard or plastic substrate on which the detection and associated reference circuits are formed.

The apparatus may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, a humidity sensor, and a module for one or more of the same.

According to a further aspect, there is provided a method of sensing environmental humidity using an apparatus,
the apparatus comprising a detection circuit and an associated reference circuit, each circuit comprising a power source coupled to a memristor via a humidity sensor, the power source configured to apply a voltage to the memristor to switch the memristor from a first resistance state to a second resistance state when the humidity sensor is exposed to a peak in environmental humidity, wherein the power source of the detection circuit is configured to have a discharge rate which is dependent upon the environmental humidity whilst the power source of the associated reference circuit is configured to have a discharge rate which is not dependent upon the environmental humidity, the resulting difference in discharge rates between the respective power sources allowing the timing of the humidity peak to be determined based on whether or not the respective memristors of the detection and associated reference circuits have both switched,
the method comprising determining the timing of a humidity peak based on whether or not the respective memristors of the detection and associated reference circuits have both switched.

According to a further aspect, there is provided an apparatus comprising a detection circuit and an associated reference circuit, each circuit comprising a power source coupled to a memristor via a resistive sensor, the power source configured to apply a voltage to the memristor to switch the memristor from a first resistance state to a second resistance state when the resistive sensor is exposed to a physical stimulus, wherein the power source of the detection circuit is configured to have a discharge rate which is dependent upon the physical stimulus whilst the power source of the associated reference circuit is configured to have a discharge rate which is not dependent upon the physical stimulus, the resulting difference in discharge rates between the respective power sources allowing the timing of the physical stimulus to be determined based on whether or not the respective memristors of the detection and associated reference circuits have both switched.

The detection and associated reference circuits may each comprise a plurality of memristors coupled to the respective power source via the respective resistive sensor, and each memristor may be configured to switch from the first resistance state to the second resistance state at a different applied voltage.

One or more of the memristor materials, dimensions and fabrication conditions may be configured to define the respective applied voltages at which the memristors switch from the first resistance state to the second resistance state.

Each memristor may be connected in series to a respective resistor, and the respective resistors may have different resistance values from one another to define the applied voltages at which the associated memristors switch from the first resistance state to the second resistance state.

The resistors may each have a resistance value somewhere between that of the first and second resistance states of the associated memristor to prevent the memristor from shorting the circuit in the second resistance state.

Each memristor may be configured to switch back from the second resistance state to the first resistance state when a reverse voltage above a predefined threshold is applied thereto.

The detection and reference circuits may comprise a respective readout electrode associated with each memristor, and a counter electrode common to all memristors of the respective circuit, to enable a readout voltage to be applied across a particular memristor to determine its resistance state.

The detection and associated reference circuits may comprise a respective diode associated with each readout electrode to prevent crosstalk between the memristors during application of the readout voltage.

The power source of the detection circuit may comprise a further resistive sensor connected across the terminals of an electrical storage cell, the further resistive sensor configured to exhibit a change in resistance on exposure to a physical stimulus, the change in resistance causing a corresponding change in the discharge rate of the electrical storage cell, and the power source of the associated reference circuit may comprise a resistor connected across the terminals of a respective electrical storage cell.

The electrical storage cell of each circuit may comprise one or more of a battery, a supercapacitor and a battery-capacitor hybrid.

The further resistive sensor may be configured to detect the same physical stimulus as, or a different physical stimulus than, the resistive sensors of the detection and associated reference circuits.

One or more of the resistive sensors and further resistive sensor may be configured to detect at least one of the following physical stimuli: humidity, electromagnetic radiation, a chemical species, a biological species, strain, temperature and pressure.

The power source of each circuit may be a proton battery comprising a graphene oxide-reduced graphene oxide junction configured to generate protons in the presence of water, the generation of protons causing a reduction in the discharge rate of the power source, and the power source of the associated reference circuit may further comprise a water barrier configured to prevent contact between water in the surrounding environment and the graphene oxide-reduced graphene oxide junction.

The resistive sensor of each circuit may be a humidity sensor configured to exhibit a decrease in resistance on exposure to a peak in environmental humidity, the decrease in resistance allowing the voltage from the power source to be applied to the memristor.

The humidity sensor may comprise graphene oxide having one or more functional groups attached thereto, and the one or more functional groups may be configured to interact with water in the surrounding environment to generate protons and produce a resulting decrease in resistance.

The detection and associated reference circuits may be formed on a memory card such that the resistive state of the respective memristors can be read out using a card reader.

The memory card may comprise a cardboard or plastic substrate on which the detection and associated reference circuits are formed.

Unless otherwise stated, the other sub-aspects described in relation to the first aspect are also applicable to the present aspect.

According to a further aspect, there is provided a method of sensing a physical stimulus using an apparatus,
the apparatus comprising a detection circuit and an associated reference circuit, each circuit comprising a power source coupled to a memristor via a resistive sensor, the power source configured to apply a voltage to the memristor to switch the memristor from a first resistance state to a second resistance state when the resistive sensor is exposed to a physical stimulus, wherein the power source of the detection circuit is configured to have a discharge rate which is dependent upon the physical stimulus whilst the power source of the associated reference circuit is configured to have a discharge rate which is not dependent upon the physical stimulus, the resulting difference in discharge rates between the respective power sources allowing the timing of the physical stimulus to be determined based on whether or not the respective memristors of the detection and associated reference circuits have both switched,
the method comprising determining the timing of a physical stimulus based on whether or not the respective memristors of the detection and associated reference circuits have both switched.

The steps of any method disclosed herein do not have to be performed in the exact order disclosed, unless explicitly stated or understood by the skilled person.

Corresponding computer programs for implementing one or more steps of the methods disclosed herein are also within the present disclosure and are encompassed by one or more of the described example embodiments.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

A description is now given, by way of example only, with reference to the accompanying drawings, in which:-
Figure 1 shows one example of the present apparatus comprising a detection circuit and an associated reference circuit;
Figure 2 shows the discharge curves for a proton battery under different humidity conditions;
Figure 3a shows how the battery voltage, sensor resistance, memristor voltage and memristance of each circuit vary in response to an "early" peak in humidity;
Figure 3b shows how the battery voltage, sensor resistance, memristor voltage and memristance of each circuit vary in response to a "late" peak in humidity;
Figure 4 shows another example of the present apparatus comprising a plurality of memristors in each circuit;
Figure 5 shows another example of the present apparatus in which each memristor is connected in series to a respective resistor;
Figure 6 shows another example of the present apparatus in which the detection and associated reference circuits are formed on a memory card;
Figure 7 shows another example of the present apparatus in which the detection and associated reference circuits form part of an electronic device;
Figure 8 shows the main steps of a method of using the present apparatus;
Figure 9 shows a computer-readable medium comprising a computer program configured to perform, control or enable the method of Figure 8;
Figure 10a shows alternative power sources for use in the detection and associated reference circuits; and
Figure 10b shows typical discharge curves for the power sources of Figure 10a.

### Description of Specific Aspects/Embodiments

Low cost environmental sensors are generally considered to be commercially unfeasible unless they can be manufactured using high throughput manufacturing methods such as printing. This problem is exacerbated when the sensors are required to store the sensor data locally because such data storage is traditionally realised using silicon-based microchips which cannot be printed. Furthermore, environmental sensors are often expected to be operational for relatively long periods of time between battery replacements/charges, which requires the use of energy-efficient components. The volatile storage media used in many existing sensors are not particularly energy-efficient, however.

There will now be described an apparatus and associated methods that may provide a solution to one or more of these issues.

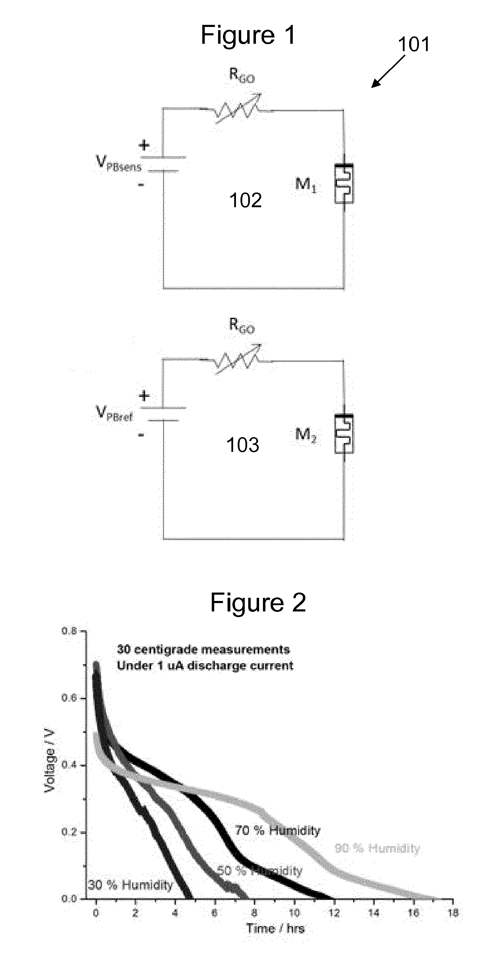

Figure 1 illustrates one example of the present apparatus 101. The apparatus 101 comprises a detection circuit 102 and an associated reference circuit 103, each circuit 102, 103 comprising a power source V_{PBsens}, V_{PBref} coupled to a memristor M₁, M₂ via a humidity sensor R_{GO}. The power source V_{PBsens}, V_{PBref} is configured to apply a voltage to the respective memristor M₁, M₂ to switch the memristor M₁, M₂ from a first resistance state to a second resistance state when the humidity sensor R_{GO} is exposed to a peak in environmental humidity. Furthermore, the power source V_{PBsens} of the detection circuit 102 is configured to have a discharge rate which is dependent upon the environmental humidity whilst the power source V_{PBref} of the associated reference circuit 103 is configured to have a discharge rate which is not dependent upon the environmental humidity.

Since the voltage from the power supply V_{PBsens}, V_{PBref} is only applied to the memristor M₁, M₂ when the humidity sensor R_{GO} is exposed to a peak in environmental humidity, the resistance state (memristance) of the memristor M₁, M₂ can be used to indicate whether or not the humidity peak has occurred. In addition, if the voltage applied to the memristor M₁, M₂ is pre-calibrated with humidity, then it is possible to quantify the level of humidity based on the threshold voltage of the memristor M₁, M₂ (assuming that the memristor M₁, M₂ has switched). Also, given that only the detection circuit 102 has a power source V_{PBsens} with a humidity-dependent discharge rate, the timing of the humidity peak can be determined based on whether or not the respective memristors M₁, M₂ of the detection 102 and associated reference 103 circuits have both switched (as discussed in more detail later).

Memristors M₁, M₂ typically retain their current resistance state until a voltage is applied to change it. As a result, the above-mentioned humidity information can be stored in the memristors M₁, M₂ without the consumption of any additional power (i.e. the memristors M₁, M₂ can be used as non-volatile storage cells). Furthermore, the power supply V_{PBsens}, V_{PBref}, humidity sensor R_{GO} and memristor M₁, M₂ of each circuit 102, 103 can be formed using printable materials. These factors enable energy-efficient humidity sensors with on-board memory to be fabricated at relatively low cost.

In some embodiments, the power source V_{PBsens}, V_{PBref} of at least the detection circuit 102 may comprise a proton battery. Proton batteries typically comprise a graphene oxide-reduced graphene oxide junction configured to generate protons in the presence of water, the generation of protons causing a reduction in the discharge rate of the battery. As a result, proton batteries tend to discharge more slowly at higher levels of humidity. Of course, other power sources may become available in future developments which have a discharge rate dependent upon humidity.

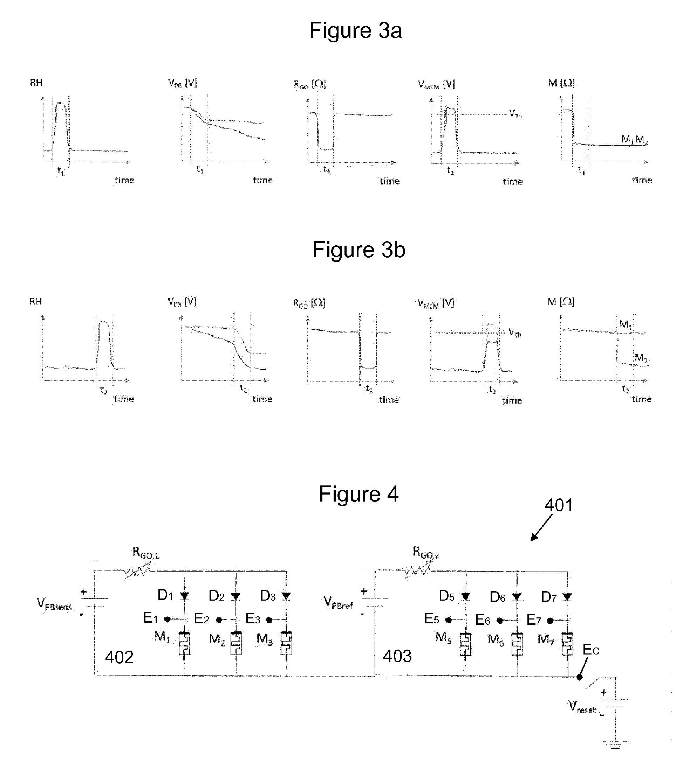

Figure 2 shows the discharge curves for a proton battery under different humidity conditions (30%, 50%, 70% and 90% relative humidity) at 30°C with a discharge current of 1µA. This humidity dependence renders proton batteries suitable for use as the power source V_{PBsens} of the detection circuit 102. To help ensure a fair comparison between the detection 102 and reference 103 circuits (described with reference to Figures 3a and 3b), the power supply V_{PBref} of the reference circuit 103 may also comprise a proton battery. In this scenario, however, the power supply V_{PBref} of the reference circuit 103 also requires a water barrier to inhibit its humidity dependence. The water barrier prevents contact between water in the surrounding environment and the graphene oxide-reduced graphene oxide junction, and can be achieved by encapsulating the power supply V_{PBref} in a water-impermeable material.

The humidity sensor R_{GO} of each circuit 102, 103 may be a resistive humidity sensor configured to exhibit a decrease in resistance on exposure to the peak in environmental humidity. The decrease in resistance allows the voltage from the power source V_{PBsens}, V_{PBref} to be applied to the memristor M₁, M₂ to switch it from the first resistance state to the second resistance state. In this way, the voltage applied to the memristor M₁, M₂ increases with the humidity of the surrounding environment. In some embodiments, the humidity sensor R_{GO} may comprise graphene oxide having one or more functional groups attached thereto, the one or more functional groups configured to interact with water in the surrounding environment to generate protons and produce a resulting decrease in resistance.

The memristor M₁, M₂ of each circuit 102, 103 may be formed from one or more solution-processable materials such as two-dimensional materials (e.g. graphene), transition metal oxides and transition metal chalcogenides. In some embodiments, the memristors M₁, M₂ may comprise a layer of transition metal oxide in contact with a layer of transition metal chalcogenide and positioned between metal electrodes to form a stack (such as Ag/MoOₓ/MoS₂/Ag). Other memristive materials such as metal halides and organic polymers may be used instead.

Figures 3a and 3b show how the power source, humidity sensor and memristor of each circuit respond to humidity peaks occurring at different points in time; the humidity peak of Figure 3a occurring earlier in time (time t₁) than the humidity peak of Figure 3b (time t₂). In this example, the power source of each circuit is a proton battery and the humidity sensor of each circuit is a graphene-oxide humidity sensor. The data for the detection circuit is denoted by the dashed lines and the data for the reference circuit is denoted by the solid lines.

As can be seen in Figure 3a, the output voltage V_{PB} of each proton battery decreases with time as it gradually discharges. Since the graphene oxide-reduced graphene oxide junction of the proton battery in the detection circuit is exposed to the water in the surrounding environment, however, its output voltage V_{PB} decreases more slowly than the proton battery in the reference circuit. When the resistance R_{GO} of the humidity sensors decreases in response to the humidity peak RH, the voltage V_{MEM} applied to the respective memristors M₁, M₂ correspondingly increases. Given that the output voltage V_{PB} of each proton battery is still relatively high at time t₁ (i.e. they are still relatively charged), the applied voltages V_{MEM} exceed the threshold voltage V_{Th} of the memristors causing both memristors M₁, M₂ to switch from a first (higher) resistance state to a second (lower) resistance state.

In Figure 3b, on the other hand, the output voltage V_{PB} of the proton battery in the reference circuit has decreased substantially relative to its fully charged state by time t₂. In contrast, since the proton battery in the detection circuit has a lower discharge rate by virtue of its humidity dependence, it has a greater output voltage V_{PB} at time t₂. As a result, the voltage V_{MEM} applied to the memristor M₂ in the detection circuit exceeds the threshold voltage V_{Th} of the memristors whilst the voltage V_{MEM} applied to the memristor M₁ in the reference circuit does not. Accordingly, only the memristor M₂ in the detection circuit is switched from the first (higher) resistance state to the second (lower) resistance state.

The resistance state of each memristor can be determined by applying a readout voltage across the memristor. The readout voltage should be large enough to generate a flow of current through the memristor but be small enough to have a negligible effect on the resistance of the memristor. The relative timing of the humidity peak can then be determined based on whether or not the memristors of both circuits have switched. As shown in Figures 3a and 3b, the switching of both memristors M₁, M₂ indicates that the humidity peak occurred when the proton battery of the reference circuit was still relatively charged (i.e. earlier in time), whilst the switching of only one memristor M₂ indicates that the humidity peak occurred after the proton battery of the reference circuit had substantially discharged (i.e. later in time). Also, in the event that neither of the memristors M₁, M₂ have switched, it may be deduced that the humidity peak occurred so late in time that even the proton battery of the detection circuit had substantially discharged by that time.

Figure 4 shows another example of the present apparatus 401. In this example, the detection 402 and associated reference 403 circuits each comprise a plurality of memristors M₁₋₃, M₅₋₇ coupled to the respective power source V_{PBsens}, V_{PBref} via the respective humidity sensor R_{GO1}, R_{GO2}. The memristors M₁₋₃, M₅₋₇ of each circuit 402, 403 are arranged in parallel in this figure, but they could be arranged in series or a combination of the two. Furthermore, each of the plurality of memristors M₁₋₃, M₅₋₇ within each circuit 402, 403 are configured to switch from the first resistance state to the second resistance state at a different applied voltage.

As mentioned previously, the level of environmental humidity can be determined based on the threshold voltage of the memristor M₁₋₃, M₅₋₇ if the voltage applied to the memristor M₁₋₃, M₅₋₇ is pre-calibrated with humidity. If each circuit 402, 403 comprises a single memristor M₁, M₂, however, then the only quantitative humidity information that can be obtained if the memristor M₁, M₂ has switched is that the humidity must have exceeded the predetermined level corresponding to the threshold voltage. The use of multiple memristors M₁₋₃, M₅₋₇ with different threshold voltages in each circuit 402, 403, on the other hand, can provide a plurality of different reference points for assessing the humidity level. In this way, if the memristors M₁₋₃, M₅₋₇ are configured to have incremental switching thresholds and one (first) memristor M₁, M₅ has switched but the next (second) one M₂, M₆ has not, then it may be concluded that the humidity exceeded the level corresponding to the threshold voltage of the first memristor M₁, M₅ but did not exceed the level corresponding to the threshold voltage of the second memristor M₂, M₆ (i.e. the magnitude of the humidity peak fell somewhere between these two predetermined levels). Furthermore, if each circuit 402, 403 comprises a relatively large number of memristors M₁₋₃, M₅₋₇ (e.g. 10, 25, 50, 75 or 100 memristors) with relatively small threshold increments therebetween (e.g. 0.05, 0.1, 0.2, 0.5 or 1 V), then the magnitude of the humidity peak can be determined with a reasonably high accuracy.

This quantitative analysis assumes that the power sources V_{PBsens}, V_{PBref} are sufficiently charged to be able to apply a voltage large enough to switch all of the memristors M₁₋₃, M₅₋₇ in the circuit 402, 403, otherwise it is not possible to determine whether it was the humidity or the power source V_{PBsens}, V_{PBref} that prevented a particular memristor M₃, M₇ from switching. Nevertheless, this may not be an issue if there is some degree of background (baseline) humidity, because the atmospheric water would reduce the discharge rate of the power source V_{PBsens} in the detection circuit 402 so that it could be used for the quantitative measurements. Furthermore, the memristors M₁₋₃, M₅₋₇ could be configured to have voltage thresholds below a predetermined level (e.g. 0.5V, 1V, 2V or 3V) to help ensure that the power source V_{PBsens} of the detection circuit 402 is capable of switching all of the respective memristors M₁₋₃ under the associated humidity conditions.

The respective applied voltages (i.e. threshold voltages) at which the memristors M₁₋₃, M₅₋₇ switch from the first resistance state to the second resisitance state may be defined by one or more of the memristor materials, dimensions and fabrication conditions. Each memristor M₁₋₃, M₅₋₇ may be configured to switch when a voltage of between 0.1V and 5V is applied thereto. Additionally or alternatively, each memristor M₁₋₃, M₅₋₇ may be connected in series to a respective resistor, the respective resistors having different resistance values from one another to define the threshold voltages.

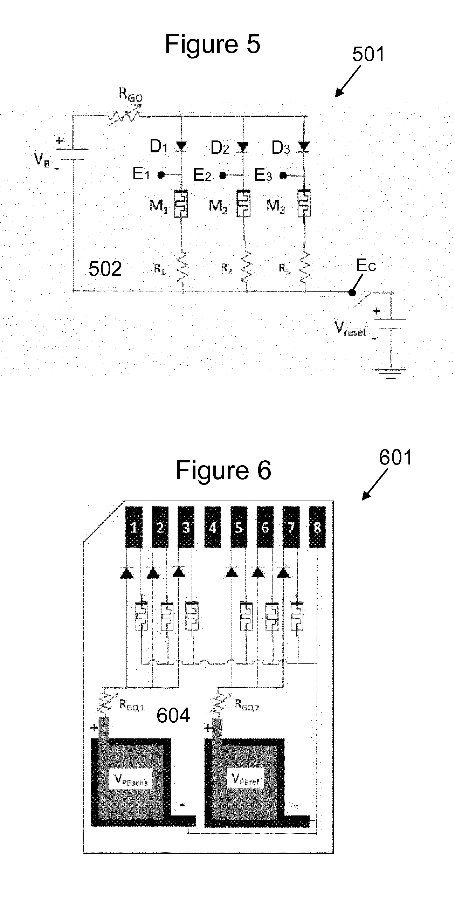

Figure 5 shows another example of the present apparatus 501. In this example, the apparatus 501 comprises a respective resistor R₁₋₃ in series with each of the memristors M₁₋₃. Although only one of the circuits 502 is shown in this figure, the detection and reference circuits would typically be configured in the same way. As well as being used to define the threshold voltages of the associated memristors M₁₋₃, the resistors R₁₋₃ can also be used to prevent the memristors M₁₋₃ from shorting the circuit 502 in the low resistance state. To achieve this, each resistor R₁₋₃ should have a resistance value somewhere between that of the first (e.g. around 10⁶-10⁸Ω) and second (e.g. around 10²Ω) resistance states of the associated memristor M₁₋₃.

As shown in Figures 4 and 5, the multi-memristor detection 402, 502 and associated reference 403 circuits also comprise a respective readout electrode E₁₋₃, E₅₋₇ associated with each memristor M₁₋₃, M₅₋₇, and a counter electrode E_{C} common to all memristors M₁₋₃, M₅₋₇ of the respective circuit 402, 403, 502, to enable a readout voltage to be applied across a particular memristor M₁₋₃, M₅₋₇ to determine its resistance state. These electrodes E₁₋₃, E₅₋₇ may also be used to apply a reverse voltage Vᵣₑₛₑₜ above a predefined threshold to the memristors M₁₋₃, M₅₋₇ to switch them back from the second resistance state to the first resistance state. This feature allows the apparatus 401, 501 to be reset after the humidity data is read out. The detection 402, 502 and reference 403 circuits also comprise a respective diode D₁₋₃, D₅₋₇ associated with each readout electrode E₁₋₃, E₅₋₇ to prevent crosstalk between the memristors M₁₋₃, M₅₋₇ during application of the readout voltage.

Figure 6 shows another example of the present apparatus 601. In this example, the detection and associated reference circuits are formed on a memory card 604 (e.g. SD, mini SD, micro SD or nano SD card) such that the resistive state of the respective memristors can be read out using a card reader. To enable readout of the humidity data, the memory card 604 is inserted into the card slot of the card reader so that the electrodes 1-8 are galvanically contacted. The memristors of the detection circuit are then read out by measuring the resistance between each of the electrodes 1-3 against electrode 4 (ground/counter electrode). Similarly, the memristors of the reference circuit are read out by measuring the resistance between each of the electrodes 5-7 against electrode 8 (ground/counter electrode). After readout, the memristors of the detection circuit can be reset by applying a reverse voltage to electrode 4 and grounding electrodes 1-3, and the memristors of the reference circuit can be reset by applying a reverse voltage to electrode 8 and grounding electrodes 5-7. The memory card 604 may comprise a cardboard or plastic substrate on which the detection and associated reference circuits are formed. This helps to reduce the manufacturing costs and enables a flexible apparatus 601 to be produced, if required.

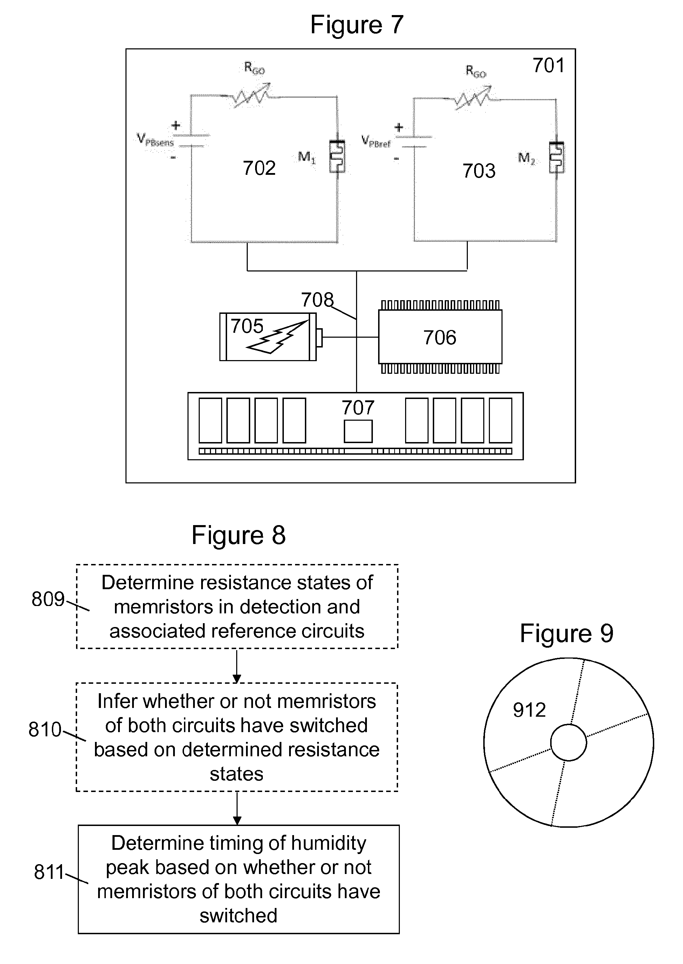

Figure 7 shows another example of the present apparatus 701. In this example, the detection 702 and reference 703 circuits form part of a device (i.e. the apparatus 701), which may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a sensor, a humidity sensor, and a module for one or more of the same.

In the example shown, the apparatus 701 comprises the detection 702 and reference 703 circuits described previously, a power source 705, a processor 706 and a storage medium 707, which are electrically connected to one another by a data bus 708.

The power source 705 is configured to provide the various components of the apparatus 701 with electrical power to enable their operation. The power source 705 may be the power source of the detection 702 or reference 703 circuit, or it may be a separate power source in addition to those of the detection 702 and reference 703 circuits. In the latter case, the power source 705 may be configured to enable recharging of the power source of one or more of the detection 702 and reference 703 circuits (if indeed they are rechargeable).

The processor 706 is configured for general operation of the apparatus 701 by providing signalling to, and receiving signalling from, the other components to manage their operation. The storage medium 707 is configured to store computer code configured to perform, control or enable operation of the apparatus 701. The storage medium 707 may also be configured to store settings for the other components. The processor 706 may access the storage medium 707 to retrieve the component settings in order to manage the operation of the other components.

The processor 706 may be a microprocessor, including an Application Specific Integrated Circuit (ASIC). The storage medium 707 may be a temporary storage medium such as a volatile random access memory. On the other hand, the storage medium 707 may be a permanent storage medium 707 such as a hard disk drive, a flash memory, or a non-volatile random access memory. The power source 705 may comprise one or more of a primary battery, a secondary battery, a capacitor, a supercapacitor and a battery-capacitor hybrid.

Figure 8 shows the main steps 809-811 of a method of sensing environmental humidity using the present apparatus. The method comprises: determining the resistance states of the memristors in the detection and associated reference circuits 809; inferring whether or not the memristors of both circuits have switched based on the determined resistance states 810; and determining the timing of a humidity peak based on whether or not the memristors of both circuits have switched 811. In some cases, steps 809 and 810 may be performed separately from step 811 (e.g. at an earlier time or different location). In this scenario, the method may comprise step 811 on its own (but using the information obtained from the separately performed steps 809 and 810), as denoted by the solid and dashed boxes in Figure 8.

Figure 9 illustrates schematically a computer/processor readable medium 912 providing a computer program according to one embodiment. The computer program may comprise computer code configured to perform, control or enable one or more of the method steps 809-811 of Figure 8. In this example, the computer/processor readable medium 912 is a disc such as a digital versatile disc (DVD) or a compact disc (CD). In other embodiments, the computer/processor readable medium 912 may be any medium that has been programmed in such a way as to carry out an inventive function. The computer/processor readable medium 912 may be a removable memory device such as a memory stick or memory card (SD, mini SD, micro SD or nano SD card). The memory card may be the same memory card 604 on which the detection and associated reference circuits are formed (illustrated in Figure 6).

Although the examples described previously have been directed to the sensing of environmental humidity, the present apparatus may also be applied to the sensing of other physical stimuli. This can be achieved by replacing the proton batteries of the detection and reference circuits with alternative power sources where the discharge rate of the respective power sources V_{PBsens}, V_{PBref} are dependent upon the physical stimuli being detected. In addition, the humidity sensor may be replaced with an alternative resistive sensor.

It will be appreciated that, in the above examples, the power source(s) can be considered to be the electrical storage cell(s) per se, without additional circuitry. However, as will be elaborated below, embodiments are possible where power source(s) can be considered to comprise additional circuitry (including resistive sensor(s)) which, in combination with the associated electrical storage cell(s), function such that the combination of the electrical storage cell(s) and additional circuitry have a discharge rate which is dependent upon the physical stimuli being detected. In such embodiments, the electrical storage cell(s) per se, may or may not have a discharge rate which is dependent upon the physical stimuli being detected. In the case where they do have a discharge rate dependent upon the physical stimuli being detected, the additional circuitry may be considered to enhance the discharge rate dependency characteristic of the electrical storage cell(s)/power source. In the case where the electrical storage cell(s) per se do not have a discharge rate dependent upon the physical stimuli being detected, the additional circuitry may be considered to provide for the discharge rate dependency characteristic of the power source (which otherwise would not be available from the electrical storage cell(s) per se).

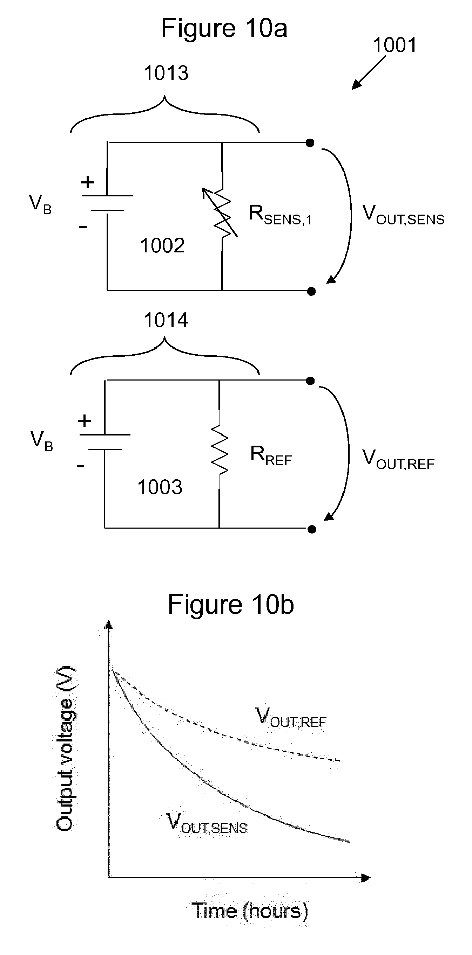

In the context of the above, where additional circuitry is used in combination with an electrical storage cell to be considered as the power source, Figure 10a shows an example of the present apparatus 1001. In this example, each circuit 1002, 1003 comprises a power source 1013, 1014 coupled to a memristor via a resistive sensor (although only the power source 1013, 1014 is illustrated). The power source 1013, 1014 is configured to apply a voltage to the memristor to switch the memristor from a first resistance state to a second resistance state when the resistive sensor is exposed to a physical stimulus. Similarly to the previous examples, the power source 1013 of the detection circuit 1002 is configured to have a discharge rate which is dependent upon the physical stimulus whilst the power source 1014 of the associated reference circuit 1003 is configured to have a discharge rate which is not dependent upon the physical stimulus. The resulting difference in discharge rates between the respective power sources 1013, 1014 allows the timing of the physical stimulus to be determined based on whether or not the respective memristors of the detection 1002 and associated reference 1003 circuits have both switched.

As shown, however, in this case the power source 1013 of the detection circuit 1002 comprises a further resistive sensor R_{SENS,1} connected across the terminals of an electrical storage cell V_{B} (e.g. a battery, supercapacitor or battery-capacitor hybrid which is not itself sensitive to the physical stimulus). The further resistive sensor R_{SENS,1} is configured to exhibit a change in resistance on exposure to a physical stimulus (which may be the same as, or different to, the physical stimulus being detected by the resistive sensor coupled between the power source 1013 and memristor), the change in resistance causing a corresponding change in the discharge rate of the electrical storage cell V_{B}. In addition, the power source 1014 of the associated reference circuit 1003 comprises a resistor R_{REF} connected across the terminals of a respective electrical storage cell V_{B}. As mentioned above, depending on the practical requirement, it may or may not be the case that the electrical storage cell(s) V_{B} per se have a discharge rate dependent upon the physical characteristic being detected without the use of the respective resistor R_{SENS,1,} R_{REF}.

Figure 10b shows typical discharge curves for the power sources 1013, 1014 of Figure 10a. In this example, the further resistive sensor R_{SENS,1} in the detection circuit 1002 has a relatively high resistance in the absence of the physical stimulus (which would typically be the same as the fixed resistance of the resistor R_{REF} in the reference circuit 1003). Once the further resistive sensor R_{SENS,1} is exposed to the physical stimulus, however, its resistance decreases causing an increase in the discharge rate of the electrical storage cell V_{B} in the detection circuit 1002 relative to the electrical storage cell V_{B} in the reference circuit 1003. This is illustrated by the higher rate of change in output voltage V_{OUT,SENS} for the detection circuit 1002 compared to the rate of change in output voltage V_{OUT,REF} for the reference circuit 1003.

In this case, since the electrical storage cell V_{B} of each circuit 1002, 1003 is not itself sensitive to the physical stimulus, the difference in the discharge rates is controlled by the resistance of the further resistive sensor R_{SENS,1} in the detection circuit 1002. Given that resistive sensors can be configured to detect a number of physical stimuli (e.g. humidity, electromagnetic radiation, a chemical species, a biological species, strain, temperature or pressure), the present apparatus 1001 can be used to provide/store timing information in a range of different sensor devices. Furthermore, since the further resistive sensor R_{SENS,1} may be configured to detect a different physical stimulus than the resistive sensors coupled between the power source and memristor of each circuit, the present apparatus 1001 may be used to provide/store sensor information for multiple stimuli at the same time.

Examples of further resistive sensors R_{SENS,1} which could be coupled in parallel to electrical storage cell(s) to provide a power source which has a discharge rate dependent upon the physical stimuli being detected (i) a photoresistor /photoconductor (e.g. Cadmium Sulphide, Cadmium Selenide/Sulphide, lead sulphide, or based on the conductive polymer polyvinylcarbazole), (ii) temperature sensor (e.g. NTCs made of metallic oxides), and (iii) strain gauges which have a low nominal resistance, but can be engineered to exhibit high nominal resistance. The nominal resistance of these sensors should ideally be >1Mohm so that discharge current is not too high. Many suitable commercial electrical storage cell(s) are available, including THINERGY® Micro-Energy Cells and Enfucell SoftBattery® cells which can be used in combination with resistive sensor(s) to provide a power source which has a discharge rate dependent upon the physical stimuli being detected.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to different embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising a detection circuit and an associated reference circuit, each circuit comprising a power source coupled to a memristor via a resistive sensor, the power source configured to apply a voltage to the memristor to switch the memristor from a first resistance state to a second resistance state when the resistive sensor is exposed to a physical stimulus, wherein the power source of the detection circuit is configured to have a discharge rate which is dependent upon the physical stimulus whilst the power source of the associated reference circuit is configured to have a discharge rate which is not dependent upon the physical stimulus, the resulting difference in discharge rates between the respective power sources allowing the timing of the physical stimulus to be determined based on whether or not the respective memristors of the detection and associated reference circuits have both switched.

2. The apparatus of claim 1, wherein the detection and associated reference circuits each comprise a plurality of memristors coupled to the respective power source via the respective resistive sensor, each memristor configured to switch from the first resistance state to the second resistance state at a different applied voltage.

3. The apparatus of claim 2, wherein one or more of the memristor materials, dimensions and fabrication conditions are configured to define the respective applied voltages at which the memristors switch from the first resistance state to the second resistance state.

4. The apparatus of claim 2, wherein each memristor is connected in series to a respective resistor, the respective resistors having different resistance values from one another to define the applied voltages at which the associated memristors switch from the first resistance state to the second resistance state.

5. The apparatus of claim 4, wherein the resistors each have a resistance value somewhere between that of the first and second resistance states of the associated memristor to prevent the memristor from shorting the circuit in the second resistance state.

6. The apparatus of any preceding claim, wherein each memristor is configured to switch back from the second resistance state to the first resistance state when a reverse voltage above a predefined threshold is applied thereto.

7. The apparatus of any preceding claim, wherein the detection and reference circuits comprise a respective readout electrode associated with each memristor, and a counter electrode common to all memristors of the respective circuit, to enable a readout voltage to be applied across a particular memristor to determine its resistance state.

8. The apparatus of claim 7, wherein the detection and associated reference circuits comprise a respective diode associated with each readout electrode to prevent crosstalk between the memristors during application of the readout voltage.

9. The apparatus of any preceding claim, wherein the power source of the detection circuit comprises a further resistive sensor connected across the terminals of an electrical storage cell, the further resistive sensor configured to exhibit a change in resistance on exposure to a physical stimulus, the change in resistance causing a corresponding change in the discharge rate of the electrical storage cell, and wherein the power source of the associated reference circuit comprises a resistor connected across the terminals of a respective electrical storage cell.

10. The apparatus of claim 9, wherein the further resistive sensor is configured to detect a different physical stimulus than the resistive sensors of the detection and associated reference circuits.

11. The apparatus of any of claims 1 to 8, wherein the power source of each circuit is a proton battery comprising a graphene oxide-reduced graphene oxide junction configured to generate protons in the presence of water, the generation of protons causing a reduction in the discharge rate of the power source, the power source of the associated reference circuit further comprising a water barrier configured to prevent contact between water in the surrounding environment and the graphene oxide-reduced graphene oxide junction.

12. The apparatus of claim 11, wherein the resistive sensor of each circuit is a humidity sensor configured to exhibit a decrease in resistance on exposure to a peak in environmental humidity, the decrease in resistance allowing the voltage from the power source to be applied to the memristor.

13. The apparatus of any preceding claim, wherein the detection and associated reference circuits are formed on a memory card such that the resistive state of the respective memristors can be read out using a card reader.

14. A method of sensing a physical stimulus using an apparatus,
the apparatus comprising a detection circuit and an associated reference circuit, each circuit comprising a power source coupled to a memristor via a resistive sensor, the power source configured to apply a voltage to the memristor to switch the memristor from a first resistance state to a second resistance state when the resistive sensor is exposed to a physical stimulus, wherein the power source of the detection circuit is configured to have a discharge rate which is dependent upon the physical stimulus whilst the power source of the associated reference circuit is configured to have a discharge rate which is not dependent upon the physical stimulus, the resulting difference in discharge rates between the respective power sources allowing the timing of the physical stimulus to be determined based on whether or not the respective memristors of the detection and associated reference circuits have both switched,
the method comprising determining the timing of a physical stimulus based on whether or not the respective memristors of the detection and associated reference circuits have both switched.

15. A computer program comprising computer code configured to perform the method of claim 14.
